# EUROPÄISCHE PATENTSCHRIFT

(11) **EP 4 751 612 B1**
(45) Veröffentlichungstag und Bekanntmachung des Hinweises auf die Patenterteilung: **30.09.2026**
(21) Anmeldenummer: 24383302.7
(22) Anmeldetag: 02.12.2024
(51) Int. Cl.: A46D 3/06, A46D 3/08

(54) **BORSTENWARENHERSTELLUNGSMASCHINE**
BRISTLE PRODUCTION MACHINE
MACHINE DE FABRICATION DE BROSSES

(43) Veröffentlichungstag der Anmeldung: 03.06.2026
(73) Patentinhaber: Zahoransky AG, 79674 Todtnau (DE)
(72) Erfinder: ESPINOSA, Iñaki, 26001 Logroño (ES); RIOJA, Victor, 26008 Logroño (ES); SCHUBNELL, Matthias, 26007 Logroño (ES); GUTIERREZ NEILA, Javier, 26329 Mansilla de la Sierra (ES)
(74) Vertreter: Lange, Johannes Michael

(56) Entgegenhaltungen:
- WO-A1-2021/204853
- DE-A1- 2 163 692
- US-A- 2 433 192
- US-A- 4 854 645

## Beschreibung

Die Erfindung betrifft eine Borstenwarenherstellungsmaschine mit einem Karussell, an dem zumindest drei in Drehrichtung des Karussells hintereinander angeordnete Halter zur Aufnahme von Borstenwarenkörpern vorgesehen sind, und mit einem Karussellantrieb, mit dem das Karussell um eine Rotationsachse drehbar angetrieben ist.

Derartige Borstenwarenherstellungsmaschinen werden auch als Karussell-Maschinen bezeichnet und ermöglichen die industrielle Fertigung von Borstenwaren, wie beispielsweise Bürsten oder Besen, wie sie in unterschiedlichen Ausführungsformen beispielsweise im Haushalt eingesetzt werden.

US 4 854 645 A offenbart eine Maschine zur Herstellung von Bürsten, die eine drehbare Trommel mit parallel zur Drehachse verlaufenden Seitenflächen für den Transport von Bürstenkörpern zu verschiedenen Bearbeitungsstationen, eine Vielzahl von schwenkbar an den Seitenflächen der Trommel angeordneten Bürstenkörperhaltern und Mittel zum Schwenken der Bürstenkörperhalter in Bezug auf die Trommel umfasst.

WO 2021/204853 A1 offenbart eine Maschine zur Bürstenherstellung mit einer Stopfstation, in der mindestens ein Stopfwerkzeug vorgesehen ist, einer Bohrstation, in der mehr Bohrwerkzeuge vorgesehen sind als Stopfwerkzeuge in der Stopfstation, und einem Transportsystem, das mehrere Trägereinheiten aufweist, die unabhängig voneinander bewegbar sind und jeweils zwei oder mehr Spannvorrichtungen für Bürstengrundkörper tragen, die von der Bohrstation zur Stopfstation weiterverstellt werden können.

DE 21 63 692 A1 offenbart eine Bürstenherstellungsmaschine mit Bohr- und Stopfwerkzeugen sowie einem drehbar gelagerten, mit wenigstens zwei Doppelarmen ausgerüsteten Spannmittelträger.

US 2 433 192 A offenbart eine weitere Ausführungsform einer Maschine zur Herstellung von Bürsten.

Karussell-Maschinen werden gerne zur Produktion von Borstenwaren eingesetzt, da sie aufgrund ihrer kompakten Bauform vergleichsweise wenig Platz benötigen. Die Halter zur Aufnahme von Borstenwarenkörpern der herzustellenden Borstenwaren sind an dem Karussell angeordnet und können mit diesem zur Bearbeitung unterschiedlichen Bearbeitungsstationen der Borstenwarenherstellungsmaschine zugeführt werden.

Derartige Borstenwarenherstellungsmaschinen weisen in der Regel eine Bohrstation mit einem Bohrwerkzeug und eine Stopfstation mit einem Stopfwerkzeug und eine Be- und/oder Entladestation zum Be- und/oder Entladen der Halter an dem Karussell auf. In der Be- und/oder Entladestation können Borstenwarenkörper zur Bearbeitung in die Halter an dem Karussell eingelegt werden. Durch eine Drehung des Karussells wird ein Borstenwarenkörper dann zunächst der Bohrstation mit dem darin befindlichen Bohrwerkzeug zugeführt. Mithilfe des Bohrwerkzeugs können Löcher zur Aufnahme von Borstenbündeln in die Borstenwarenkörper gebohrt werden. In der darauffolgenden Stopfstation können Borstenbündel mithilfe eines Stopfwerkzeugs in die zuvor gebohrten Löcher der Borstenwarenkörper eingestopft werden. Die Borstenbündel werden mithilfe von Ankern in den Löchern der Borstenwarenkörper fixiert. Anschließend werden die Borstenwaren mit dem Karussell in die Be- und/oder Entladestation bewegt und können dort entnommen werden.

Bisherige Borstenwarenherstellungsmaschinen der eingangsgenannten Art erfordern eine Vielzahl an Stellantrieben zur Positionierung der Werkzeuge zur Bearbeitung der Borstenwarenkörper und zur Positionierung der Halter und des Karussells. Auch aufgrund der vorgesehenen Anzahl an Stellantrieben sind die bisherigen Borstenwarenherstellungsmaschinen in die Herstellung und im Betrieb vergleichsweise teuer und aufwendig.

Aufgabe der Erfindung ist es daher, eine kostengünstige und Borstenwarenherstellungsmaschine der eingangsgenannten Art bereitzustellen.

Zur Lösung der Aufgabe wird eine Borstenwarenherstellungsmaschine mit den Merkmalen des unabhängigen Anspruchs vorgeschlagen. Zur Lösung der Aufgabe wird insbesondere eine Borstenwarenherstellungsmaschine mit einem Karussell, an dem zumindest drei in Drehrichtung des Karussells hintereinander angeordnete Halter zur Aufnahme von Borstenwarenkörpern vorgesehen sind, und mit einem Karussellantrieb vorgeschlagen, mit dem das Karussell um eine Rotationsachse drehbar angetrieben ist. Die Borstenwarenherstellungsmaschine weist zumindest eine Bohrstation mit einem Bohrwerkzeug, zumindest eine Stopfstation mit einem Stopfwerkzeug und zumindest eine Be-und/oder Entladestation zum Be- und/oder Entladen der Halter auf. Erfindungsgemäß ist vorgesehen, dass eine Vorschubachse des Bohrwerkzeugs und eine Stopfachse des Stopfwerkzeugs parallel zueinander ausgerichtet sind.

Die Vorschubachse des Bohrwerkzeugs ist dabei die Achse, entlang der das Bohrwerkzeug beim Bohren der Löcher in das Material der Borstenwarenkörper geschoben wird. Eine Rotationsachse eines Bohrers des Bohrwerkzeugs ist deckungsgleich mit der Vorschubachse.

Die Stopfachse des Stopfwerkzeugs verläuft in der Richtung, in der das Stopfwerkzeug Borstenbündel in die zuvor gebohrten Löcher der Borstenwarenkörper einstopft.

Die parallele Ausrichtung der Vorschubachse des Bohrwerkzeugs und der Stopfachse des Stopfwerkzeugs zueinander ermöglicht es, das Bohrwerkzeug und das Stopfwerkzeug an einem gemeinsamen Ständer anzuordnen und/oder mit einem gemeinsamen Stellantrieb in eine Ausgangsposition zu bewegen, aus der heraus beide Werkzeuge die Bearbeitung von bereitgehaltenen Borstenwarenkörpern vornehmen.

Insgesamt kann dies die Anzahl kostspieliger Teile, wie beispielsweise die Anzahl von Stellantrieben reduzieren, die die Borstenwarenherstellungsmaschine aufweist. Dies ermöglicht die besonders wirtschaftliche Bereitstellung einer derartigen Borstenwarenherstellungsmaschine.

Die Rotationsachse des Karussells kann in einer Ebene zwischen der Vorschubachse des Bohrwerkzeugs und der Stopfachse des Stopfwerkzeugs angeordnet sein. Die Rotationsachse des Karussells kann zudem in einer Ebene angeordnet sein, die parallel zur Vorschubachse des Bohrwerkzeugs und der Stopfachse des Stopfwerkzeugs ausgerichtet ist.

Besonders bevorzugt sind die Rotationsachse des Karussells, die Vorschubachse des Bohrwerkzeugs und die Stopfachse des Stopfwerkzeugs horizontal ausgerichtet.

Das Karussell erhält einen symmetrischen Aufbau, der eine besonders einfache Aufnahme von Bearbeitungskräfte begünstigt, wenn die Halter für die Borstenwarenkörper gleichmäßig verteilt um die Rotationsachse des Karussells an dem Karussell angeordnet sind. Die Aufnahme von Bearbeitungskräften, die bei der Erzeugung der Löcher in den Borstenwarenkörpern und beim Einstopfen von Borstenbündeln in die Borstenwarenkörper auftreten, wird vereinfacht, wenn die Halter gleichmäßig verteilt um die Rotationsachse des Karussells an dem Karussell angeordnet sind und die Rotationsachse des Karussells in einer Ebene zwischen der Vorschubachse des Bohrwerkzeugs und der Stopfachse des Stopfwerkzeugs angeordnet ist. Besonders vorteilhaft kann es in diesem Zusammenhang sein, wenn die Vorschubachse des Bohrwerkzeugs und die Stopfachse des Stopfwerkzeugs denselben Abstand zu der Ebene aufweisen, innerhalb der die Rotationsachse des Karussells angeordnet ist. Im besten Fall können sich so die beim Bearbeiten der in den Haltern befindlichen Borstenwarenkörper auftretenden Bearbeitungskräfte gegenseitig aufheben.

Der Karussellantrieb kann dazu eingerichtet sein, das Karussell mit einem Haltemoment in seiner Drehstellung zu fixieren. Der Karussellantrieb fixiert das Karussell und kann Bearbeitungskräfte, die beim Bearbeiten der in den Haltern befindlichen Borstenwarenkörper auf das Karussell wirken, aufnehmen. Alternativ oder zusätzlich dazu kann es sinnvoll sein, wenn die Borstenwarenherstellungsmaschine eine Arretiervorrichtung für das Karussell aufweist. Mit der Arretiervorrichtung kann eine Drehung des Karussells beim Bearbeiten der in den Haltern befindlichen Borstenwarenkörper unterbunden werden. Die Arretiervorrichtung kann als mechanische Arretiervorrichtung ausgebildet sein. Die Arretiervorrichtung kann einen Arretierbolzen und an dem Karussell um mehrere die Rotationsachse verteilte Arretierkerben aufweisen, in die der Arretierbolzen in Arretierstellung eingreifen kann, um das Karussell in einer Drehstellung zu fixieren. Die in Arretierstellung befindliche Arretiervorrichtung kann dann verhindern, dass das Karussell durch die Bearbeitung der in den Haltern befindlichen Borstenwarenkörpern und die dabei in das Karussell eingeleiteten Bearbeitungskräfte aus seiner Position gedreht wird.

Bei einer Ausführungsform der Borstenwarenherstellungsmaschine sind die Bohrstation und die Stopfstation auf einer Seite des Karussells und die Be- und/oder Entladestation auf einer in Bezug auf die Rotationsachse des Karussells gegenüberliegenden Seite angeordnet. Die Rotationsachse des Karussells verläuft dann zwischen der Be- und/oder Entladestation einerseits und der Bohrstation und der Stopfstation andererseits.

Erfindungsgemäß weist die Borstenwarenherstellungsmaschine eine Schwenkvorrichtung mit einer Schwenkachse und einem Schwenkantrieb für das Karussell auf, wobei die Schwenkachse rechtwinklig zur Rotationsachse des Karussells ausgerichtet ist.

Mithilfe der Schwenkvorrichtung ist es möglich, das Karussell als Ganzes zusammen mit den daran befindlichen Haltern zu schwenken. So können die in den Haltern befindlichen Borstenwarenkörper zur Bearbeitung in unterschiedlichen Winkelstellungen dem Bohrwerkzeug und dem Stopfwerkzeug präsentiert werden. Die parallele Ausrichtung der Vorschubachse des Bohrwerkzeugs und der Stopfachse des Stopfwerkzeugs ermöglicht die gemeinsame Schwenkpositionierung der in den Haltern befindlichen Borstenwarenkörper durch die Schwenkbewegung des Karussells als Ganzes um die rechtwinklig zur Rotationsachse des Karussells ausgerichtete Schwenkachse. So können separate, den jeweiligen Haltern zugewiesene Schwenkantrieb vermieden werden. Auch dies ermöglicht eine Reduktion kostspieliger Stellantriebe.

Die Schwenkvorrichtung ermöglicht die Ausrichtung der an den Haltern aufgespannten Borstenwarenkörper zur Herstellung von Borstenwaren mit schrägstehenden Borstenbündeln.

Die Borstenwarenherstellungsmaschine kann zudem eine Horizontalverstellvorrichtung aufweisen, die einen Horizontalverstellantrieb und eine rechtwinklig zu der Vorschubachse des Bohrwerkzeugs und der Stopfachse des Stopfwerkzeugs orientierte Horizontalführung aufweist, entlang der das Karussell positioniert werden kann.

Die Horizontalverstellvorrichtung ermöglicht es, das Karussell als Ganzes zusammen mit den daran angeordneten Haltern und den daran befindlichen Borstenwarenkörpern zur Bearbeitung der Borstenwarenkörper relativ zu dem Bohrwerkzeug und dem Stopfwerkzeug zu positionieren. Die Positionierung sämtlicher Halter und damit sämtlicher in den Haltern befindlicher Borstenwarenkörper entlang der Horizontalführung kann dann mit nur einem einzigen Horizontalverstellantrieb erfolgen. Auf diese Weise lassen sich separate, den einzelnen Haltern zugeordnete Horizontalverstellantriebe vermeiden. Auch dies ermöglicht es, eine derartige Borstenwarenherstellungsmaschine günstig fertigen und anbieten zu können.

Um die Borstenwarenkörper zur Bearbeitung auch in einer vertikalen Richtung relativ zu dem Bohrwerkzeug und zu dem Stopfwerkzeug positionieren zu können, kann die Borstenwarenherstellungsmaschine eine Hubvorrichtung mit einem Hubantrieb und einer vertikal orientierten Hubachse aufweisen. Entlang der Hubachse kann das Karussell als Ganzes höhenverstellbar sein. Die Höhenverstellung sämtlicher Halter und sämtlicher daran befindlicher Borstenwarenkörper kann dann mit nur einem einzigen Hubantrieb erfolgen. Auch dies ermöglicht die Einsparung individueller separater Stellantriebe, die sonst für jeden einzelnen Halter an dem Karussell erforderlich wären.

Bei einer besonders vorteilhaften Ausführungsform der Borstenwarenherstellungsmaschine ist vorgesehen, dass diese einen Schlitten aufweist, an dem das Bohrwerkzeug und das Stopfwerkzeug gemeinsam angeordnet sind. Mithilfe des Schlittens können das Bohrwerkzeug und das Stopfwerkzeug gemeinsam in eine Ausgangsposition relativ zu den Haltern an dem Karussell und damit relativ zu den in den Haltern befindlichen Borstenwarenkörpern bewegt werden. Aus der Ausgangsposition kann dann die Bearbeitung der Borstenwarenkörper mit dem Bohrwerkzeug und dem Stopfwerkzeug erfolgen.

Der Schlitten kann in einer Schlittenführung linearverschiebbar gelagert sein. Die Schlittenführung kann parallel zu der Vorschubachse des Bohrwerkzeugs und parallel zu der Stopfachse des Stopfwerkzeugs orientiert sein. Die Borstenwarenherstellungsmaschine kann einen Schlittenantrieb aufweisen, mit dem der Schlitten in der Schlittenführung linearverschiebbar ist. Dies ermöglicht eine vollautomatisierte gemeinsame Positionierung des Stopfwerkzeugs und des Bohrwerkzeugs in die für die Bearbeitung der Borstenwarenkörper jeweils erforderliche Ausgangsposition, aus der heraus dann eine Bearbeitung der bereitgehaltenen Borstenwarenkörper erfolgen kann. Vorteilhaft kann es in diesem Zusammenhang sein, wenn das Bohren von Löchern an einem an dem Bohrwerkzeug präsentierten Borstenwarenkörpers und das Stopfen von Borstenbündeln in korrespondierende Löcher eines an dem Stopfwerkzeug präsentierten Borstenwarenkörpers synchron erfolgt.

Das Karussell kann eine Drehdurchführung aufweisen, die eine Versorgung, beispielsweise eine elektrische und/oder pneumatische Versorgung und/oder eine signaltechnische Versorgung, von Funktionseinheiten, insbesondere von Haltern, Spannzangen, Sensoren und/oder Antrieben, die an dem Karussell angeordnet sind, ermöglicht. Auf diese Weise können zum Beispiel die Halter an dem Karussell mit Energie und/oder mit Signalen versorgt werden. Die Drehdurchführung ermöglicht es, das Karussell auch ohne Richtungswechsel in nur einer Richtung zu drehen, um die Borstenwarenkörper von Station zu Station zu transportieren.

Werden Versorgungsleitungen und/oder Signalleitungen direkt an Funktionseinheiten, beispielsweise an die Halter und/oder Halterantriebe angeschlossen, die an dem Karussell angeordnet sind, kann es notwendig sein, das Karussell nach einer Drehung um beispielsweise 240° in einer Richtung in einer Rückwärtsdrehung um ebenfalls 240° in entgegengesetzter Richtung zurückzudrehen, um eine Beschädigung der Versorgungsleitungen und/oder Signalleitungen zu vermeiden. Derartige Einschränkungen sind bei einer Drehdurchführung, die die Versorgung der an dem Karussell angeordneten Funktionseinheiten ermöglicht, nicht zu beachten.

Das Karussell kann somit eine Drehdurchführung zur elektrischen und/oder pneumatischen und/oder signaltechnischen Versorgung von an dem Karussell angeordneten Funktionseinheiten, wie beispielsweise weiter unten noch näher erläuterten Halterantrieben aufweisen.

Die Halter an dem Karussell können jeweils um eine parallel zur Rotationsachse des Karussells orientierte Halter-Rotationsachse drehbar an dem Karussell gelagert sein. Jeder Halter kann zur Aufnahme von zwei oder drei oder mehr Borstenwaren Körpern eingerichtet sein.

Durch die drehbare Lagerung der Halter um ihre parallel zur Rotationsachse des Karussells orientierte Halter-Rotationsachsen können an den Haltern befindlichen Borstenwarenkörper zur Bearbeitung relativ zu dem Bohrwerkzeug und dem Stopfwerkzeug ausgerichtet werden. So können schrägstehende Löcher zur Aufnahme von schrägstehenden Borstenbündeln erzeugt werden, ohne eine Achsausrichtung des Bohrwerkzeugs und des Stopfwerkzeugs verändern zu müssen. Dies kann den maschinellen Aufwand zur Fertigung von Borstenwaren mit entsprechend schrägstehenden Borstenbündeln reduzieren.

Wenn die Halter zur Aufnahme von zwei oder drei oder mehr Borstenwarenkörpern eingerichtet sind, kann die Borstenwarenherstellungsmaschine mit einer entsprechend höheren Anzahl von Borstenwarenkörpern bestückt werden.

Die Borstenwarenherstellungsmaschine kann zumindest einen Halterantrieb aufweisen. Bei einer Ausführungsform der Borstenherstellungsmaschine ist dieser zumindest eine Halterantrieb außerhalb des Karussells angeordnet und damit ein externer Halterantrieb. Bei einer anderen Ausführungsform der Borstenherstellungsmaschine ist dieser zumindest eine Halterantrieb an dem Karussell angeordnet. Mithilfe des zumindest einen Halterantriebs können ein oder mehrere Halter an dem Karussell um ihre jeweilige Halter-Rotationsachse gedreht werden, um die an den Haltern befindlichen Borstenwarenkörper relativ zu dem Bohrwerkzeug und relativ zu dem Stopfwerkzeug zu positionieren. Mithilfe des zumindest einen Halterantriebs können mehrere an einem Halter befindliche Borstenwarenkörper nacheinander zur Bearbeitung dem Bohrwerkzeug oder dem Stopfwerkzeug präsentiert werden. Ein derartiger Halterantrieb ermöglicht einen Wechsel eines zu bearbeitenden Borstenwarenkörpers an einem Halter, der mehr als nur einen Borstenwarenkörper aufnehmen kann.

Das Karussell kann eine Lagerplatte aufweisen, an der die Halter drehbar gelagert sind. Der Lagerplatte kann eine Gegenlagerplatte zugeordnet sein. Die Halter können zwischen der Lagerplatte und der Gegenlagerplatte und an beiden drehbargelagert angeordnet sein. Die Lagerplatte und die Gegenlagerplatte können über zumindest eine Verbindungstrebe miteinander verbunden sein. Sowohl in der Lagerplatte als auch in der Gegenlagerplatte können entsprechende Lager zur drehbaren Lagerung der Halter angeordnet sein.

Bei einer Ausführungsform der Borstenwarenherstellungsmaschine kann die Lagerplatte mit dem Karussellantrieb des Karussells um die Rotationsachse des Karussells drehbar sein. Der Karussellantrieb kann über ein Getriebe mit dem Karussell, insbesondere mit der Lagerplatte des Karussells antriebsverbunden sein.

Bei einer Ausführungsform der Borstenwarenherstellungsmaschine ist an der Lagerplatte zumindest ein Halterantrieb angeordnet. Ein derartiger Halterantrieb ist dann ein mitdrehender Halterantrieb, der an dem Karussell angeordnet ist. Jedem Halter an der Lagerplatte kann ein eigener Halterantrieb zugeordnet sein.

Bei einer anderen Ausführungsform der Borstenwarenherstellungsmaschine ist zumindest ein Halterantrieb als externer Halterantrieb vorgesehen. Ein externer Halterantrieb ist in diesem Zusammenhang ein solcher Halterantrieb, der nicht an dem Karussell angeordnet ist und der nicht mit dreht. Über ein Getriebe kann eine Antriebsbewegung des externen Halterantriebs auf den ihm zugeordneten Halter übertragen werden. Bei einer Ausführungsform der Borstenwarenherstellungsmaschine sind mehrere Halter mit einem Halterantrieb angetrieben. Ein derartiger Halterantrieb kann dabei entweder an dem Karussell, also beispielsweise an der zuvor erwähnten Lagerplatte des Karussells, oder aber außerhalb des Karussells als externer Halterantrieb angeordnet sein.

Weist die Borstenwarenherstellungsmaschine einen Halterantrieb auf, der mehreren Haltern zugeordnet ist, kann der Halterantrieb über ein als Verteilergetriebe ausgebildetes Getriebe mit zumindest zwei, vorzugsweise mit allen Haltern antriebsverbunden sein. Ein derartiges Verteilergetriebe kann beispielsweise Zahnräder, insbesondere Stirnzahnräder, und/oder Reibräder und/oder Riemenscheiben und Antriebsriemen umfassen.

Bei einer Ausführungsform der Borstenwarenherstellungsmaschine weisen die Halter jeweils zumindest eine Spannzange für Borstenwarenkörper und/oder Borstenwaren auf. Die Borstenherstellungsmaschine kann eine Bedieneinheit aufweisen, die zur Entkopplung einer Antriebsverbindung zu einem in der Be- und/oder Entladestation befindlichen Halter und/oder zum Öffnen einer Spannzange eines in der Be- und/oder Entladestation befindlichen Halters eingerichtet ist.

Mithilfe der Bedieneinheit kann somit ein in der Be- und/oder Entladestation befindlicher Halter und insbesondere seine Spannzange geöffnet werden, um eine fertige Borstenware zu entnehmen und/oder den Halter mit einem zu bearbeitenden Borstenwarenkörper zu bestücken.

Insbesondere dann, wenn sämtliche Halter an dem Karussell mit einem einzigen Halterantrieb antriebsverbunden sind, beispielsweise mittels eines Verteilergetriebes, kann es zweckmäßig sein, wenn die Bedieneinheit, wie zuvor erwähnt, auch zur Entkopplung einer Antriebsverbindung zu dem in der Be- und/oder Entladestation befindlichen Halter eingerichtet ist. Die Antriebsverbindung zu dem in der Be- und/oder Entladestation befindlichen Halter kann dann zur Bestückung des Halters mit einem Borstenwarenkörper und/oder zur Entnahme einer fertigen Borstenware temporär entkoppelt werden.

Die Be- und/oder Entladestation kann einen Greifer zur Entnahme fertiger Borstenwaren und/oder zum Bestücken der Halter mit Borstenwarenkörpern aufweisen. Dies ermöglicht die vollautomatische und besonders arbeitssichere Bestückung der Halter mit Borstenwarenkörpern und auch die automatische und arbeitssichere Entnahme fertig hergestellter Borstenwaren.

Die Erfindung wird nachfolgend anhand von Ausführungsbeispielen näher beschrieben, ist aber nicht auf diese Ausführungsbeispiele beschränkt. Weitere Ausführungsbeispiele ergeben sich durch Kombination der Merkmale einzelner oder mehrerer Schutzansprüche untereinander und/oder durch Kombination einzelner oder mehrerer Merkmale der Ausführungsbeispiele.

Es zeigen:
- Fig. 1: eine perspektivische Darstellung einer ersten Borstenwarenherstellungsmaschine mit einem motorisch angetriebenen Karussell, an dem drei schwenkbar gelagerte Halter für Borstenwarenkörper angeordnet sind, wobei die Halter mit daran befindlichen Borstenwarenkörpern zu drei unterschiedlichen Stationen der Borstenwarenherstellungsmaschine bewegbar sind, und wobei eine der Stationen eine Bohrstation und eine zweite der Stationen eine Stopfstation ist,
- Fig. 2: eine Seitenansicht der in Figur 1 gezeigten Borstenwarenherstellungsmaschine,
- Fig. 3: eine weitere perspektivische Ansicht der in den vorherigen Figuren gezeigten Borstenwarenherstellungsmaschine,
- Fig. 4: eine Draufsicht auf die in den Figuren 1 bis 3 gezeigte Borstenwarenherstellungsmaschine,
- Fig. 5: eine perspektivische Darstellung einer weiteren Borstenwarenherstellungsmaschine, deren Aufbau dem Aufbau der in den Figuren 1 bis 4 gezeigten Borstenwarenherstellungsmaschine entspricht, deren Halter jedoch im Vergleich zu der in den Figuren 1 bis 4 gezeigten Borstenwarenherstellungsmaschine zur Aufnahme von drei Borstenwarenkörpern eingerichtet sind,
- Fig. 6: eine Draufsicht auf die in Figur 5 gezeigte Borstenwarenherstellungsmaschine,
- Fig. 7: eine perspektivische Darstellung einer Borstenwarenherstellungsmaschine mit einem Karussell und einer Bohr- und einer Stopfstation zur Herstellung von WC-Bürsten, wobei jedem Halter für Borstenwarenkörper ein eigener Halterantrieb zugeordnet ist, um den jeweiligen Halter an einer Lagerplatte des Karussells zu drehen,
- Fig. 8: eine perspektivische Darstellung der in Fig. 7 gezeigten Borstenwarenherstellungsmaschine mit Blick auf eine Rückseite der Lagerplatte des Karussells zur Veranschaulichung einer Drehdurchführung für Versorgungs- und/oder Signalleitungen,
- Fig. 9: eine perspektivische Darstellung einer Borstenwarenherstellungsmaschine mit einem Karussell und einer Bohr- und einer Stopfstation zur Herstellung von WC-Bürsten, wobei die Borstenwarenherstellungsmaschine einen gemeinsamen Halterantrieb für die Halter an dem Karussell aufweist, mit dem die Halter an einer Lagerplatte des Karussells gedreht werden können,
- Fig. 10: eine perspektivische Darstellung der in Fig. 9 gezeigten Borstenwarenherstellungsmaschine mit Blick auf eine Vorderseite der Lagerplatte des Karussells,
- Fig. 11: eine perspektivische Darstellung einer Borstenwarenherstellungsmaschine mit einem Karussell und einer Bohr- und einer Stopfstation zur Herstellung von WC-Bürsten, wobei an einer Lagerplatte des Karussells, an der die Halter für die Borstenkörper drehbar gelagert sind, für jeden Halter ein Halterantrieb angeordnet ist, mit dem der jeweilige Halter an der Lagerplatte des Karussells gedreht werden kann,
- Fig. 12: eine Vorderansicht der in Fig. 11 gezeigten Borstenwarenherstellungsmaschine mit Blick auf eine Vorderseite der Lagerplatte des Karussells zur Veranschaulichung der Positionen der Halterantriebe, sowie
- Fig. 13: eine teilgeschnittene Seitenansicht der in den Figuren 1 bis 4 gezeigten Borstenwarenherstellungsmaschine zur Veranschaulichung eines Getriebes der Borstenwarenherstellungsmaschine, über das der Karussellantrieb mit der Lagerplatte des Karussells und die Halterantriebe mit den drehbar an der Lagerplatte des Karussells gelagerten Haltern für die Borstenwarenkörper antriebsverbunden sind.

Wird in der nachfolgenden Figurenbeschreibung nicht explizit auf ein bestimmtes Ausführungsbeispiel Bezug genommen, beziehen sich die Ausführungen auf alle in den Figuren gezeigten Ausführungsbeispiele.

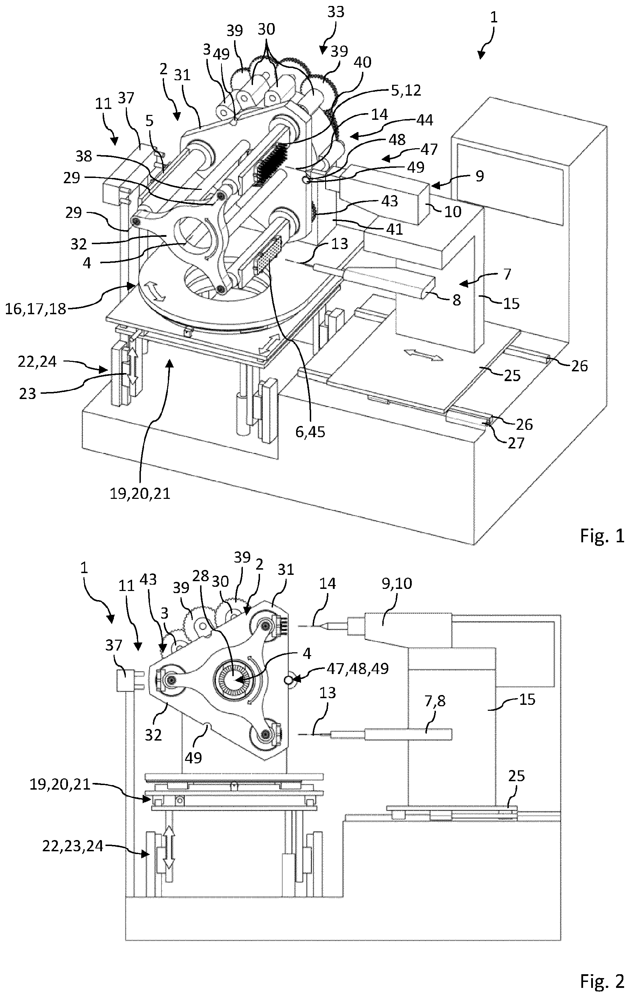

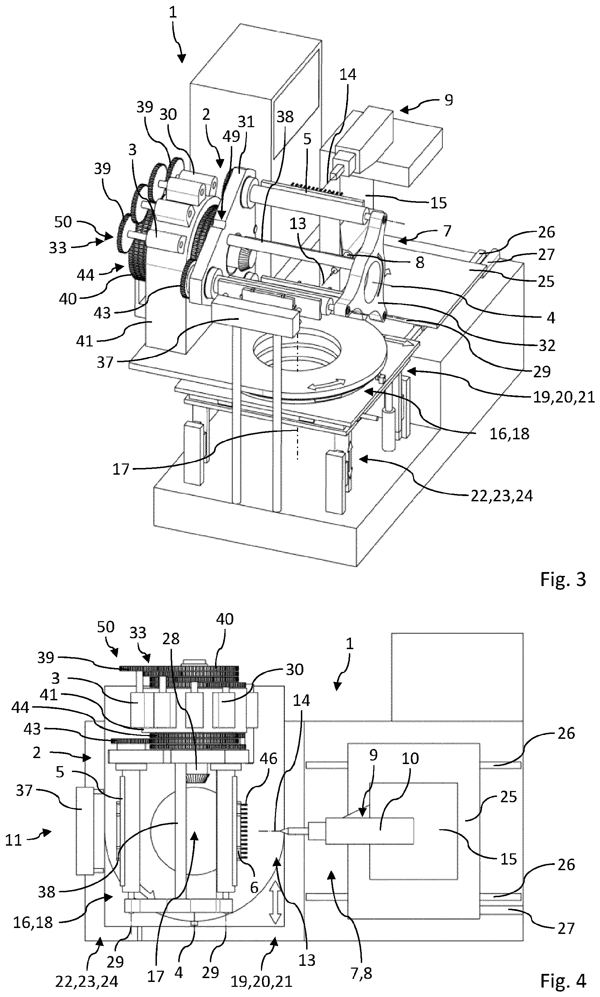

Die Figuren 1-4 und 13, 5 und 6, 7 und 8, 9 und 10 sowie 11 und 12 zeigen unterschiedliche Ausführungsformen von jeweils im Ganzen mit 1 bezeichneten Borstenwarenherstellungsmaschinen.

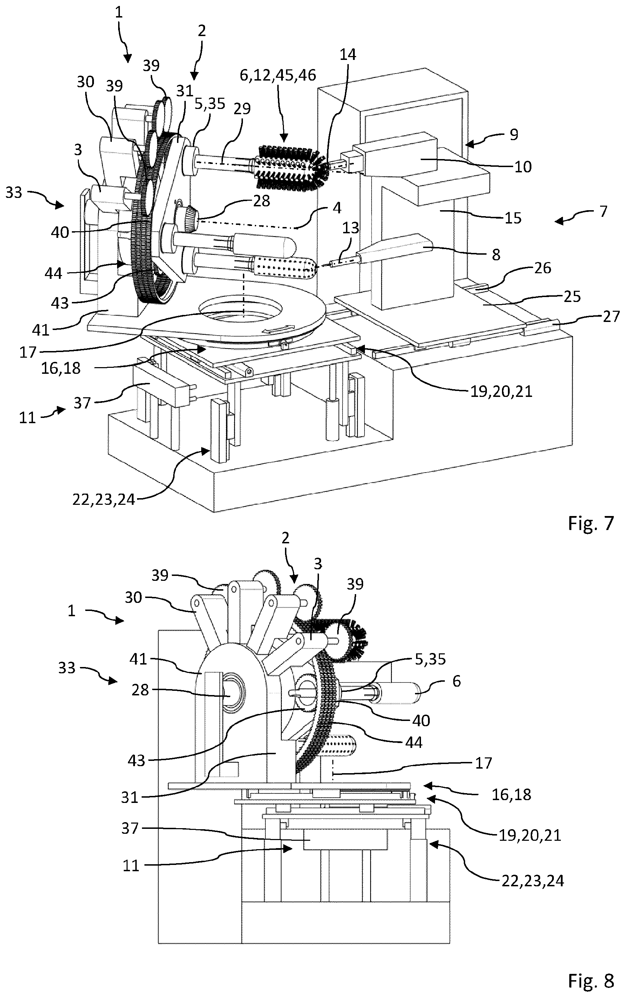

Die in den Figuren 1-6 und 13 gezeigten Borstenwarenherstellungsmaschinen 1 sind zur Herstellung langgestreckter Bürsten oder Besen eingerichtet. Die in den Figuren 7-12 gezeigten Borstenwarenherstellungsmaschinen 1 sind zur Herstellung von langstieligen WC-Bürsten eingerichtet.

Jede in den Figuren gezeigte Borstenwarenherstellungsmaschine 1 weist ein Karussell 2 auf, an dem drei in Drehrichtung des Karussells 2 hintereinander angeordnete Halter 5 zur Aufnahme von Borstenwarenkörpern 6 vorgesehen sind. Jede Borstenwarenherstellungsmaschine 1 weist einen Karussellantrieb 3 in Form eines Elektromotors auf, mit dem das Karussell 2 um eine Rotationsachse 4 drehbar angetrieben ist.

Jede gezeigte Borstenwarenherstellungsmaschine 1 weist eine Bohrstation 7 mit einem Bohrwerkzeug 8 und eine Stopfstation 9 mit einem Stopfwerkzeug 10 und eine Be- und/oder Entladestation 11 für Borstenwarenkörper 6 und Borstenwaren 12 auf.

In der Bohrstation 7 werden mithilfe des Bohrwerkzeugs 8 Löcher 45 in bereitgehaltene Borstenwarenkörper 6 gebohrt. In der darauffolgenden Stopfstation 9 werden mithilfe des Stopfwerkzeugs 10 Borstenbündel 46 in die in der vorherigen Bohrstation 7 erzeugten Löcher 45 eingestopft und im Borstenwarenkörper 6 verankert.

Die Figuren zeigen, dass eine Vorschubachse 13 des Bohrwerkzeugs 8 und eine Stopfachse 14 des Stopfwerkzeugs 10 bei allen gezeigten Borstenwarenherstellungsmaschinen 1 parallel zueinander ausgerichtet sind.

Das Bohrwerkzeug 8 und das Stopfwerkzeug 10 jeder der gezeigten Borstenwarenherstellungsmaschinen 1 sind an einem gemeinsamen Ständer 15 der jeweiligen Borstenwarenherstellungsmaschine 1 angeordnet.

Die Rotationsachse 4 des Karussells 2 jeder gezeigten Borstenwarenherstellungsmaschine 1 ist in einer Ebene zwischen der Vorschubachse 13 des Bohrwerkzeugs 8 und der Stopfachse 14 des Stopfwerkzeugs 10 angeordnet, wobei diese Ebene parallel zu der Vorschubachse 13 und der Stopfachse 14 ausgerichtet ist.

Die Rotationsachse 4 des Karussells 2, die Vorschubachse 13 des Bohrwerkzeugs 8 und die Stopfachse 14 des Stopfwerkzeugs 10 sind horizontal ausgerichtet. Dies ist bei jeder der in den Figuren gezeigten Borstenwarenherstellungsmaschinen 1 der Fall.

Die Halter 5 sind bei den gezeigten Borstenwarenherstellungsmaschinen 1 gleichmäßig verteilt um die Rotationsachse 4 des jeweiligen Karussells 2 an dem Karussell 2 angeordnet.

Sämtliche Borstenwarenherstellungsmaschinen 1 weisen eine Schwenkvorrichtung 16 mit einer Schwenkachse 17 und einem Schwenkantrieb 18 für das jeweilige Karussell 2 auf. Die Schwenkachse 17 ist rechtwinklig zur Rotationsachse 4 des Karussells 2 und damit vertikal ausgerichtet.

Mittels einer Horizontalverstellvorrichtung 19 der jeweiligen Borstenwarenherstellungsmaschine 1 kann das Karussell 2 horizontal zu den beiden Werkzeugen 8 und 10 positioniert werden.

Die jeweilige Horizontalverstellvorrichtung 19 weist einen Horizontalverstellantrieb 20 und eine rechtwinklig zu der Vorschubachse 13 des Bohrwerkzeugs 8 und zu der Stopfachse 14 des Stopfwerkzeugs 10 orientierte Horizontalführung 21 auf. Entlang der Horizontalführung 21 kann das Karussell 2 relativ zu dem Bohrwerkzeug 8 und dem Stopfwerkzeug 10 positioniert werden, um die in den Haltern 5 befindlichen Borstenwarenkörper 6 zur Bearbeitung relativ zu dem Bohrwerkzeug 8 bzw. dem Stopfwerkzeug 10 ausrichten zu können.

Jede gezeigte Borstenwarenherstellungsmaschine 1 weist außerdem eine Hubvorrichtung 22 auf. Jede Hubvorrichtung 22 umfasst einen Hubantrieb 23 und eine vertikal orientierte Hubachse 24, entlang der das jeweilige Karussell 2 zur vertikalen Positionierung der in den Haltern 5 befindlichen Borstenwarenkörper 6 relativ zu dem Bohrwerkzeug 8 und dem Stopfwerkzeug 10 höhenverstellbar ist.

Jede Borstenwarenherstellungsmaschine 1 weist einen Schlitten 25 auf, an dem das Bohrwerkzeug 8 und das Stopfwerkzeug 10 gemeinsam angeordnet sind. Der zuvor bereits erwähnte Ständer 15, an dem das Bohrwerkzeug 8 des Stopfwerkzeug 10 angeordnet sind, ist auf diesem Schlitten 25 aufgestellt.

Der Schlitten 25 ist in einer Schlittenführung 26 linearverschiebbar gelagert. Die Schlittenführung 26 ist parallel zu der Vorschubachse 13 des Bohrwerkzeugs 8 und parallel zu der Stopfachse 14 des Stopfwerkzeugs 10 orientiert. Mithilfe des Schlittens 25 können das Bohrwerkzeug 8 und das Stopfwerkzeug 10 in eine Ausgangsposition relativ zu dem Karussell 2 bewegt werden, aus der heraus die Bearbeitung der an den Haltern 5 befindlichen Borstenwarenkörper 6 erfolgt. Je nachdem in welcher Winkelstellung die Borstenwarenkörper 6 an den Haltern 5 mithilfe des Karussells 2 präsentiert werden, kann es erforderlich sein, die Ausgangsposition anzupassen, aus der heraus die Bearbeitung der Borstenwarenkörper 6 in den Haltern 5 mithilfe des Bohrwerkzeugs 8 und des Stopfwerkzeugs 10 erfolgt. Dies kann dann einfach und effektiv mithilfe des linearverschiebbaren Schlittens 25 erfolgen. Um den jeweiligen Schlitten 25 maschinell verstellen zu können, umfasst jede der gezeigten Borstenwarenherstellungsmaschinen 1 einen Schlittenantrieb 27.

Zur Versorgung von an dem Karussell 2 befindlichen Funktionseinheiten, nämlich beispielsweise den Haltern 5 oder weiter unten noch näher erläuterten Halterantrieben 30 weist jedes Karussell 2 eine Drehdurchführung 28 auf. Die Drehdurchführung 28 erlaubt die elektrische und/oder pneumatische und/oder signaltechnische Versorgung von an dem Karussell 2 befindlichen Funktionseinheiten, wie Haltern 5 oder auch Halterantrieben 30.

Die Halter 5 sind bei allen gezeigten Borstenwarenherstellungsmaschinen 1 jeweils um eine parallel zur Rotationsachse 4 des jeweiligen Karussells 2 orientierte Halter-Rotationsachse 29 drehbar an dem Karussell 2 gelagert.

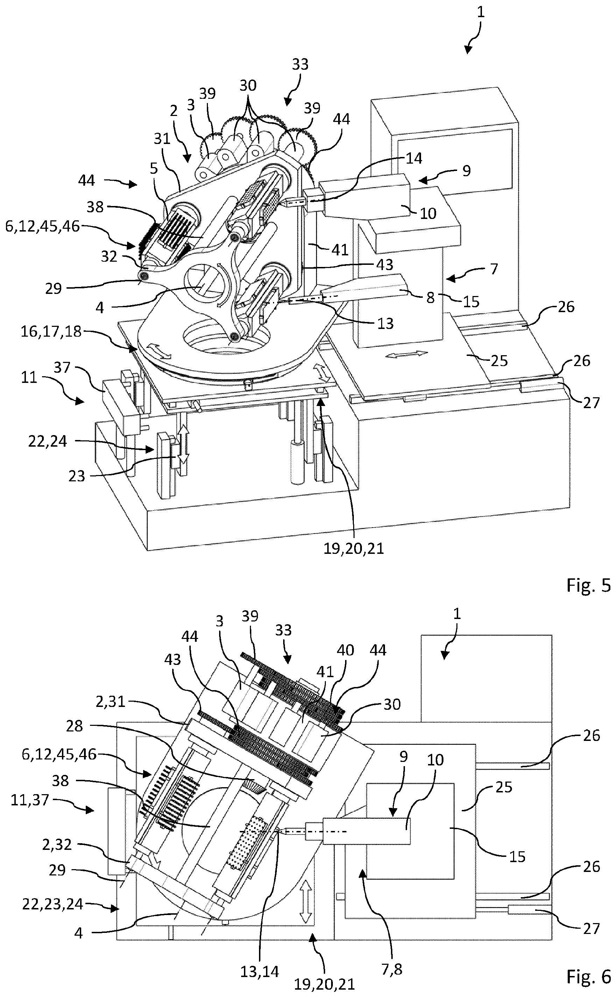

Bei der in den Figuren 5 und 6 gezeigten Borstenwarenherstellungsmaschine 1 sind die Halter 5 dazu eingerichtet, jeweils drei Borstenwarenkörper 6 aufzunehmen. Die Halter 5 der in den Figuren 5 und 6 gezeigten Borstenwarenherstellungsmaschine 1 weisen somit jeweils drei Spannplätze für Borstenwarenkörper 6 auf. Durch eine Rotation der Halter 5 um ihre Halter-Rotationsachse 29 können die an den unterschiedlichen Spannplätzen aufgespannten Borstenwarenkörper 6 zur Bearbeitung den Werkzeugen, nämlich dem Bohrwerkzeug 8 und dem Stopfwerkzeug 10 präsentiert werden.

Die in den Figuren 1-8 und 13 gezeigten Borstenwarenherstellungsmaschinen 1 weisen für jeden drehbargelagerten Halter 5 jeweils einen Halterantrieb 30 auf, der nicht an dem jeweiligen Karussell 2 angeordnet ist und als externer Halterantrieb 30 bezeichnet werden kann. Die externen Halterantriebe 30 stehen über ein Getriebe 33, das die Zahnräder 39 und 43 sowie die Zwischenzahnräder 44 umfasst, in Antriebsverbindung mit den drehbaren Haltern 5. Die Getriebe der in den Figuren 1 bis 6 und 12 gezeigten Borstenwarenherstellungsmaschinen 1 umfassen darüber hinaus noch Getriebewellen 50, die einen Lagerbock 41 der jeweiligen Borstenwarenherstellungsmaschine 1 durchsetzen.

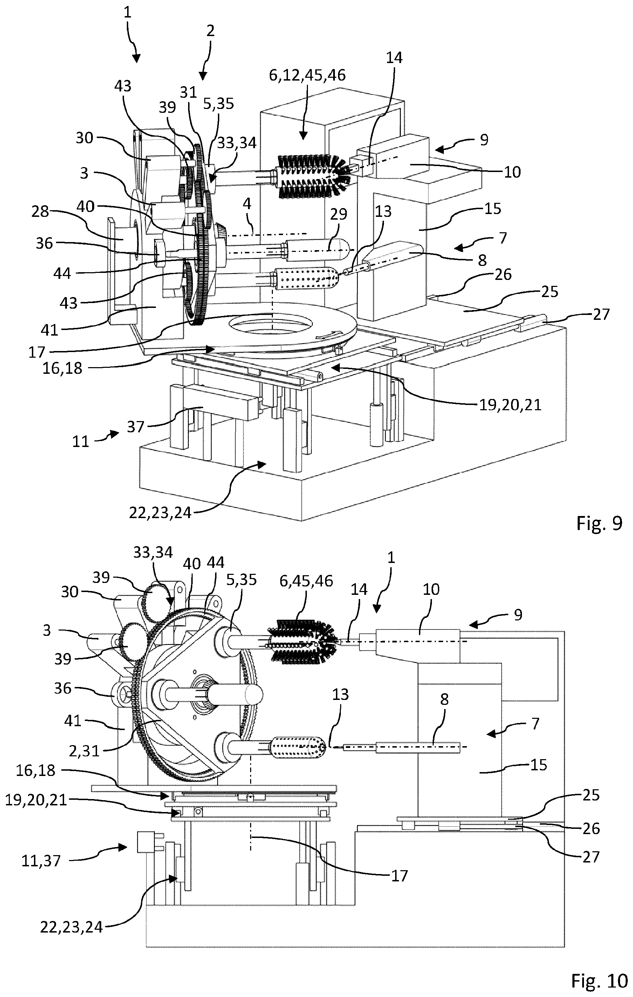

Bei der in den Fig 9 und 10 gezeigten Borstenwarenherstellungsmaschine 1 ist ein einzelner externer Halterantrieb 30 vorgesehen, der über ein Getriebe 33, das als Verteilergetriebe 34 ausgebildet ist, mit allen drei Haltern 5, die an dem Karussell 2 vorgesehen sind, antriebsverbunden ist. Die Halter 5 dieser Borstenwarenherstellungsmaschine 1 weisen Zahnräder 43 auf, die über das Zwischenzahnrad 44 mit den Zahnrädern 39 der Halterantriebe 30 antriebsverbunden sind.

Jedes der gezeigten Karusselle 2 umfasst jeweils eine Lagerplatte 31, an der die Halter 5 drehbar gelagert sind. Bei den in den Figuren 1-6 und 13 gezeigten Borstenwarenherstellungsmaschinen 1 ist der Lagerplatte 31 eine Gegenlagerplatte 32 zugeordnet. Die Halter 5 sind zwischen der Lagerplatte 31 und der Gegenlagerplatte 32 angeordnet und an diesen drehbar gelagert. Die Lagerplatte 31 und die Gegenlagerplatte 32 sind über Verbindungstreben 38 miteinander verbunden.

Die Lagerplatte 31 der in den Figuren gezeigten Karusselle 2 werden mit dem Karussellantrieb 3 des jeweiligen Karussells 2 um die Rotationsachse 4 des Karussells 2 gedreht. Bei sämtlichen in den Figuren gezeigten Borstenwarenherstellungsmaschinen 1 sind die Lagerplatten 31 über ein Getriebe 33 mit dem jeweiligen Karussellantrieb 3 antriebsverbunden.

Bei der in den Figuren 1-4 und 13 gezeigten Borstenwarenherstellungsmaschine 1 umfasst dieses Getriebe 33 miteinander verbundene Zahnräder 39 und 40. Das Zahnrad 39 ist an einer Abtriebswelle des Karussellantriebs 3 angeordnet, während das Zahnrad 40 über eine Getriebewelle 50 mit der Lagerplatte 31 verbunden ist. Das Zahnrad 39 überträgt eine Antriebsbewegung des Karussellantrieb 3 über die Getriebewelle 50 auf die damit verbundene Lagerplatte 31 des Karussells 2.

Die in den Figuren 5 und 6 gezeigte Borstenwarenherstellungsmaschine 1 weist ein entsprechend aufgebautes Getriebe 33 auf, das ebenfalls Zahnräder 39 und 40, mehrere Getriebewellen 50 und Zwischenzahnräder 44 umfasst und zur Übertragung der Antriebsbewegung des Karussellantriebs 3 auf die Lagerplatte 31 des Karussells 2 dient.

Bei den in den Figuren 7-12 gezeigten Borstenwarenherstellungsmaschinen 1 ist das Zahnrad 40, das mit der Lagerplatte 31 des jeweiligen Karussells 2 verbunden ist, als außenverzahntes Hohlrad ausgebildet. Die Antriebsbewegung des Karussellantriebs 3 wird über das außen an dem Zahnrad 40 angreifende Zahnrad 39 auf die Lagerplatte 31 übertragen, die innerhalb des Zahnrads 40 positioniert ist.

Diese Ausführungsformen der Borstenwarenherstellungsmaschine 1 erfordern zwar ein Zahnrad 40 mit größerem Durchmesser. Allerdings wird bei diesen Ausführungsformen keine Durchführung eines Antriebsstrangs vom Karussellantrieb 3 zur Lagerplatte 31 durch einen Lagerbock 41 des Karussells 2 benötigt. Entsprechende Durchführungen sind bei den in den anderen Figuren gezeigten Borstenwarenherstellungsmaschinen 1 vorgesehen.

Bei den in den Figuren 7-12 gezeigten Borstenwarenherstellungsmaschinen 1 ermöglicht das Getriebe 33 mit seinen Zahnrädern 39 und 40, nicht nur die Übertragung der Antriebsbewegung des Karussellantriebs 3, sondern auch eine besonders geringe Distanz der Halter 5 an der Lagerplatte 31 zueinander und damit eine kompakte Gestaltung des Karussells 2.

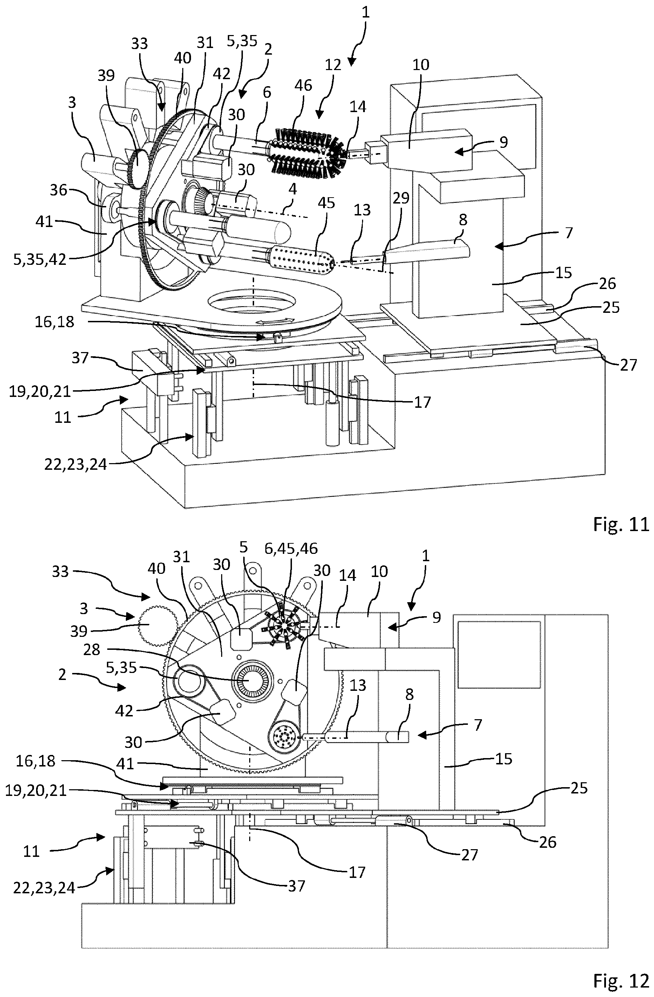

Bei der in den Figuren 11 und 12 gezeigten Borstenwarenherstellungsmaschine sind an der Lagerplatte 31 drei Halterantriebe 30 angeordnet. Jeweils einer der Halterantriebe 30 ist dabei einem der Halter 5 zugeordnet. Die Halterantriebe 30 sind über Antriebsriemen 42 mit den ihnen zugeordneten Haltern 5 verbunden. Die Halterantriebe 30 an der Lagerplatte 31 werden über die Drehdurchführung 28 des Karussells 2 sowohl mit Strom als auch mit Steuersignalen versorgt.

Die in den Figuren 9 und 10 gezeigte Borstenwarenherstellungsmaschine 1 weist ein als Verteilergetriebe 34 ausgebildetes Getriebe 33 auf. Über das Verteilergetriebe 34 ist der einzige externe Halterantrieb 30, der an dem Lagerbock 41 und damit nicht an der rotierenden Lagerplatte 31 angeordnet ist, mit jedem der drei drehbargelagerten Halter 5 antriebsverbunden. Das Verteilergetriebe 34 weist neben dem Zahnrad 39 auch ein als doppeltverzahntes Hohlrad ausgebildetes Zwischenzahnrad 44 und weitere Zahnräder 43 auf, die jeweils mit den Haltern 5 verbunden sind.

Bei den in den Figuren 1-6 gezeigten Borstenwarenherstellungsmaschinen 1 sind die Zahnräder 43 an den Haltern 5 über die an den Getriebewellen 50 angeordneten Zwischenzahnräder 44 mit den Zahnrädern 39 an den Halterantrieben 30 verbunden. Die Getriebewellen 50 sind im Lagerbock 41 drehbar gelagert. Die Zahnräder 39 der in den Figuren 1-6 gezeigten Borstenwarenherstellungsmaschinen 1 werden dabei direkt von den Halterantrieben 30 angetrieben.

Die Halter 5 der in den Figuren 7-12 gezeigten Borstenwarenherstellungsmaschine 1 sind als Spannzangen 35 ausgebildet. Die in diesen Figuren gezeigten Borstenwarenherstellungsmaschinen 1 dienen der Herstellung von WC-Bürsten.

Figur 8 zeigt, dass die Zahnräder 43 an den Haltern 5 als Hohlräder ausgebildet sind. Dies ermöglicht es, die Borstenwarenkörper 6 durch die Zahnräder 43 zu stecken, was eine kompakte Ausbildung der Borstenwarenherstellungsmaschine 1 begünstigt. Auch langstielige Borstenwarenkörper 6 von WC-Bürsten lassen sich so platzsparend aufnehmen. Die in die Zahnräder 43 eingesteckten Borstenwarenkörper 6 stehen an der Vorderseite der Lagerplatte 31 des Karussells 2 somit weniger weit über.

Die in den Figuren 9 und 10 sowie 11 und 12 gezeigten Borstenwarenherstellungsmaschinen 1 weisen jeweils eine Bedieneinheit 36 auf. Mithilfe der Bedieneinheit 36 können die Spannzangen 35 der in die Be- und/oder Entladestation 11 der Borstenwarenherstellungsmaschine 1 bewegten Halter 5 geöffnet werden. Aus den geöffneten Spannzangen 35 können die fertigen Borstenwaren 12 entnommen werden. Anschließend können die geöffneten Spannzangen 35 an den Haltern 5 mit zu bearbeitenden Borstenwarenkörpern 6 bestückt werden.

Bei der in den Figuren 9 und 10 gezeigten Borstenwarenherstellungsmaschine 1 ist die Bedieneinheit 36 auch dazu eingerichtet, eine Antriebsverbindung zwischen dem jeweils in der Be- und/oder Entladestation 11 befindlichen Halter 5 und dem Halterantrieb 30 zu entkoppeln. Dies ist sinnvoll, da bei dieser Ausführungsform der Borstenwarenherstellungsmaschine 1 ein einziger externer Halterantrieb 30 vorgesehen ist, der über das Getriebe 33 und seine Zahnräder 39, 43 und 44 in Antriebsverbindung mit jedem der drei Halter 5 steht. Das Zwischenzahnrad 44 dieses als Verteilergetriebe 34 ausgebildeten Getriebes 33 ist ein innen-und außenverzahntes Hohlrad. Innerhalb des Zwischenzahnrads 44 sind die mit den Haltern 5 verbundenen Zahnräder 43 angeordnet und greifen in die Innenverzahnung des Zwischenzahnrads 44 ein. Das Zwischenzahnrad 44 wird von dem Halterantrieb 3 über das Zahnrad 39 angetrieben, das mit der Außenverzahnung des Zwischenzahnrads 44 kämmt.

Um zu verhindern, dass sich der in der Be- und/oder Entladestation 11 befindliche Halter 5 beim Beladen oder bei der Entnahme mit den anderen Haltern 5 mitdreht oder aber die Halter 5 an der Bohrstation 7 und der Stopfstation 9 angehalten werden müssen, ist die Entkopplung der Antriebsverbindung zweckmäßig.

Jede der in den Figuren gezeigten Borstenwarenherstellungsmaschinen 1 weist in der Be- und/oder Entladestation 11 einen Greifer 37 auf, der sowohl zur Entnahme fertiger Borstenwaren 12 als auch zum Bestücken der Halter 5 mit Borstenwarenkörpern 6 eingerichtet ist.

Zur Aufnahme von beim Bearbeiten der Borstenwarenkörper 6 auftretenden Kräften weist die in den Figuren 1 bis 4 und 13 gezeigte Borstenwarenherstellungsmaschine 1 eine Arretiervorrichtung 47 für das Karussell 2 auf. Die Arretiervorrichtung 47 ist als mechanische Arretiervorrichtung ausgebildet und umfasst einen Arretierbolzen 48 am Lagerbock 41 des Karussells 2 und drei Arretierkerben 49 an der Lagerplatte 31 des Karussells 2. Zur Arretierung des Karussells 2 greift der Arretierbolzen 48 in die Arretierkerbe 49 ein, die zwischen den Haltern 5 angeordnet ist, die sich in der Bohrstation 7 und in der Stopfstation 9 befinden.

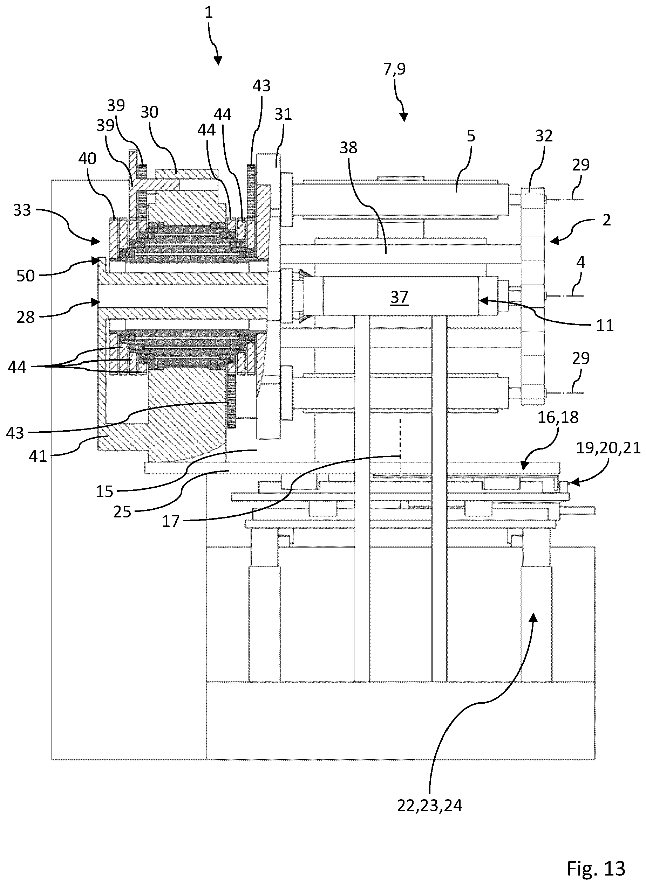

Figur 13 zeigt eine teilgeschnittene Seitenansicht der in den Figuren 1-4 gezeigten Borstenwarenherstellungsmaschine 1. Die teilgeschnittene Darstellung der Borstenwarenherstellungsmaschine 1 zeigt den Aufbau des Getriebes 33 zwischen dem Karussellantrieb 3 und dem Karussell 2 mit seiner Lagerplatte 31 und den drei Halterantrieben 30 und den drehbargelagerten Haltern 5.

Figur 13 zeigt, dass die Zwischenzahnräder 44 auf Getriebewellen 50 angeordnet sind. Die Getriebewellen 50 sind im Lagerbock 41 drehbar gelagert und ermöglichen eine Übertragung der Antriebsbewegung des Karussellantriebs 3 auf die Lagerplatte 31 des Karussells 2 und der Halterantriebe 30 auf die drehbar gelagerten Halter 5. Jede Getriebewelle 50 trägt beidseits des Lagerbocks 41 jeweils ein Zwischenzahnrad 44.

Die in Figur 13 auf der linken Seite des Lagerbocks 41 befindlichen Zwischenzahnräder 44 kämmen jeweils mit einem der Zahnräder 39, die von dem Karussellantrieb 3 bzw. von einem der Halterantriebe 30 angetrieben werden.

Über die Getriebewellen 50 können die Antriebsbewegungen der Antriebe 3 und 30 durch den Lagerbock 41 auf die auf der rechten Seite des Lagerbocks 41 gezeigten Zwischenzahnräder 44 übertragen werden.

Die Antriebsbewegungen werden dort über die Zahnräder 43 an den Haltern 5 bzw. über das Zahnrad 40, das mit der Lagerplatte 31 verbunden ist, abgegriffen.

## Patentansprüche

1. Borstenwarenherstellungsmaschine (1) mit einem Karussell (2), an dem zumindest drei in Drehrichtung des Karussells (2) hintereinander angeordnete Halter (5) zur Aufnahme von Borstenwarenkörpern (6) vorgesehen sind, und einem Karussellantrieb (3), mit dem das Karussell (2) um eine Rotationsachse (4) drehbar angetrieben ist, wobei die Borstenwarenherstellungsmaschine (1) zumindest eine Bohrstation (7) mit einem Bohrwerkzeug (8) und zumindest eine Stopfstation (9) mit einem Stopfwerkzeug (10) und zumindest eine Be- und/oder Entladestation (11) zum Be-und/oder Entladen der Halter (5) aufweist, und wobei eine Vorschubachse (13) des Bohrwerkzeugs (8) und eine Stopfachse (14) des Stopfwerkzeugs (10) parallel zueinander ausgerichtet sind, **dadurch gekennzeichnet, dass** die Borstenwarenherstellungsmaschine (1) eine Schwenkvorrichtung (16) mit einer Schwenkachse (17) und einem Schwenkantrieb (18) für das Karussell (2) aufweist, wobei die Schwenkachse (19) rechtwinklig zur Rotationsachse (4) des Karussells (2) ausgerichtet ist.

2. Borstenwarenherstellungsmaschine (1) nach Anspruch 1, wobei das Bohrwerkzeug (8) und das Stopfwerkzeug (10) an einem gemeinsamen Ständer (15) angeordnet sind und/oder wobei die Borstenwarenherstellungsmaschine (1) eine Arretiervorrichtung (47) für das Karussell (2) aufweist.

3. Borstenwarenherstellungsmaschine (1) nach Anspruch 1 oder 2, wobei die Rotationsachse (4) des Karussells (2) in einer Ebene zwischen der Vorschubachse (13) des Bohrwerkzeugs (8) und der Stopfachse (14) des Stopfwerkzeugs (10) und/oder in einer Ebene angeordnet ist, die parallel zu der Vorschubachse (13) des Bohrwerkzeugs (8) und der Stopfachse (14) des Stopfwerkzeugs (10) ausgerichtet ist.

4. Borstenwarenherstellungsmaschine (1) nach einem der vorherigen Ansprüche, wobei die Rotationsachse (4) des Karussells (2), die Vorschubachse (13) des Bohrwerkzeugs (8) und die Stopfachse (14) des Stopfwerkzeugs (10) horizontal ausgerichtet sind.

5. Borstenwarenherstellungsmaschine (1) nach einem der vorherigen Ansprüche, wobei die Halter (5) gleichmäßig verteilt um die Rotationsachse (4) des Karussells (2) an dem Karussell (2) angeordnet sind.

6. Borstenwarenherstellungsmaschine (1) nach einem der vorherigen Ansprüche, wobei die Borstenwarenherstellungsmaschine (1) eine Horizontalverstellvorrichtung (17) mit einem Horizontalverstellantrieb (20) und einer rechtwinklig zu der Vorschubachse (13) des Bohrwerkzeugs (8) und der Stopfachse (14) des Stopfwerkzeugs (10) orientierten Horizontalführung (21) aufweist, entlang der das Karussell (2) positionierbar ist.

7. Borstenwarenherstellungsmaschine (1) nach einem der vorherigen Ansprüche, wobei die Borstenwarenherstellungsmaschine (1) eine Hubvorrichtung (22) mit einem Hubantrieb (23) und einer vertikal orientierte Hubachse (24) aufweist, entlang der das Karussell (2) höhenverstellbar ist.

8. Borstenwarenherstellungsmaschine (1) nach einem der vorherigen Ansprüche, wobei die Borstenwarenherstellungsmaschine (1) einen Schlitten (25) aufweist, an dem das Bohrwerkzeug (8) und das Stopfwerkzeug (10) gemeinsam angeordnet sind.

9. Borstenwarenherstellungsmaschine (1) nach dem vorherigen Anspruch, wobei der Schlitten (25) in einer Schlittenführung (26) linearverschiebbar gelagert ist, die parallel zur der Vorschubachse (13) des Bohrwerkzeugs (8) und parallel zu der Stopfachse (14) des Stopfwerkzeugs (10) orientiert ist.

10. Borstenwarenherstellungsmaschine (1) nach einem der beiden vorherigen Ansprüche, wobei die Borstenwarenherstellungsmaschine (1) einen Schlittenantrieb (27) aufweist, mit dem der Schlitten (25) in der Schlittenführung (26) linearverschiebbar ist.

11. Borstenwarenherstellungsmaschine (1) nach einem der vorherigen Ansprüche, wobei das Karussell (2) eine Drehdurchführung (28) zur elektrischen und/oder pneumatischen Versorgung von an dem Karussell (2) befindlichen Funktionseinheiten aufweist.

12. Borstenwarenherstellungsmaschine (1) nach einem der vorherigen Ansprüche, wobei die Halter (5) jeweils um eine parallel zur Rotationsachse (4) des Karussells (2) orientierte Halter-Rotationsachse (29) drehbar an dem Karussell (2) gelagert sind, und/oder wobei jeder Halter (5) zur Aufnahme von zwei oder drei oder mehr Borstenwarenkörpern (6) eingerichtet ist.

13. Borstenwarenherstellungsmaschine (1) nach einem der vorherigen Ansprüche, wobei das Karussell (2) eine Lagerplatte (31) aufweist, an der die Halter (5) drehbar gelagert sind, vorzugsweise wobei der Lagerplatte (31) eine Gegenlagerplatte (32) zugeordnet ist und die Halter (5) zwischen der Lagerplatte (31) und der Gegenlagerplatte (32) und an diesen drehbargelagert angeordnet sind.

14. Borstenwarenherstellungsmaschine (1) nach einem der vorherigen Ansprüche, wobei der Karussellantrieb (3) über ein Getriebe (33) mit dem Karussell (2), insbesondere mit der Lagerplatte (31) des Karussells (2), antriebsverbunden ist.

15. Borstenwarenherstellungsmaschine (1) nach einem der vorherigen Ansprüche, wobei die Borstenwarenherstellungsmaschine (1) zumindest einen Halterantrieb (30) aufweist, insbesondere wobei der Halterantrieb (30) außerhalb des Karussells (2) oder an dem Karussell (2) angeordnet ist.

16. Borstenwarenherstellungsmaschine (1) nach einem der vorherigen Ansprüche, wobei mehrere Halter (5) mit einem Halterantrieb (30) angetrieben sind, oder wobei jedem Halter (5) ein Halterantrieb (30) zugeordnet ist.

17. Borstenwarenherstellungsmaschine (1) nach einem der vorherigen Ansprüche, wobei die Borstenwarenherstellungsmaschine (1) einen Halterantrieb (30) aufweist, der über ein als Verteilergetriebe (34) ausgebildetes Getriebe (33) mit zumindest zwei, vorzugsweise mit allen Haltern (5), antriebsverbunden ist.

18. Borstenwarenherstellungsmaschine (1) nach einem der vorherigen Ansprüche, wobei die Halter (5) jeweils zumindest eine Spannzange (35) für Borstenwarenkörper (6) und/oder Borstenwaren (12) aufweisen.

19. Borstenwarenherstellungsmaschine (1) nach einem der vorherigen Ansprüche, wobei die Borstenwarenherstellungsmaschine (1) eine Bedieneinheit (36) aufweist, die zur Entkopplung einer Antriebsverbindung zu einem in der Be- und/oder Entladestation (11) befindlichen Halter (5) und/oder zum Öffnen einer Spannzange (35) eines in der Be- und/oder Entladestation (11) befindlichen Halters (5) eingerichtet ist.

20. Borstenwarenherstellungsmaschine (1) nach einem der vorherigen Ansprüche, wobei die Be- und/oder Entladestation (11) einen Greifer (37) zur Entnahme fertiger Borstenwaren (12) und/oder zum Beladen der Halter (5) mit Borstenwarenkörpern (6) aufweist.

## Claims

1. Bristle production machine (1) having a carousel (2) on which at least three holders (5) arranged one behind the other in the direction of rotation of the carousel (2) for receiving bristle product bodies (6) are provided, and a carousel drive (3) with which the carousel (2) is rotatably driven about an axis of rotation (4), wherein the bristle production machine (1) has at least one drilling station (7) with a drilling tool (8) and at least one tufting station (9) with a tufting tool (10) and at least one loading and/or unloading station (11) for loading and/or unloading the holders (5), and wherein a feed axis (13) of the drilling tool (8) and a tufting axis (14) of the tufting tool (10) are aligned parallel to one another, **characterized in that** the bristle production machine (1) has a pivoting device (16) with a pivot axis (17) and a pivot drive (18) for the carousel (2), wherein the pivot axis (17) is aligned at right angles to the axis of rotation (4) of the carousel (2).

2. Bristle production machine (1) according to claim 1, wherein the drilling tool (8) and the tufting tool (10) are arranged on a common stand (15) and/or wherein the bristle production machine (1) has a locking device (47) for the carousel (2).

3. Bristle production machine (1) according to claim 1 or 2, wherein the axis of rotation (4) of the carousel (2) is arranged in a plane between the feed axis (13) of the drilling tool (8) and the tufting axis (14) of the tufting tool (10) and/or in a plane that is aligned parallel to the feed axis (13) of the drilling tool (8) and the tufting axis (14) of the tufting tool (10).

4. Bristle production machine (1) according to one of the preceding claims,
wherein the axis of rotation (4) of the carousel (2), the feed axis (13) of the drilling tool (8), and the tufting axis (14) of the tufting tool (10) are aligned horizontally.

5. Bristle production machine (1) according to one of the preceding claims,
wherein the holders (5) are arranged evenly distributed around the axis of rotation (4) of the carousel (2) on the carousel (2).

6. Bristle production machine (1) according to one of the preceding claims,
wherein the bristle production machine (1) has a horizontal adjustment device (19) with a horizontal adjustment drive (20) and a horizontal guide (21) oriented at right angles to the feed axis (13) of the drilling tool (8) and the tufting axis (14) of the tufting tool (10), along which the carousel (2) can be positioned.

7. Bristle production machine (1) according to one of the preceding claims,
wherein the bristle production machine (1) has a lifting device (22) with a lifting drive (23) and a vertically oriented lifting axis (24), along which the carousel (2) is height-adjustable.

8. Bristle production machine (1) according to one of the preceding claims,
wherein the bristle production machine (1) has a carriage (25) on which the drilling tool (8) and the tufting tool (10) are jointly arranged.

9. Bristle production machine (1) according to the preceding claim, wherein the carriage (25) is mounted in a linearly displaceable manner in a carriage guide (26) which is oriented parallel to the feed axis (13) of the drilling tool (8) and parallel to the tufting axis (14) of the tufting tool (10).

10. Bristle production machine (1) according to one of the two preceding claims, wherein the bristle production machine (1) has a carriage drive (27) with which the carriage (25) is linearly displaceable in the carriage guide (26).

11. Bristle production machine (1) according to one of the preceding claims,
wherein the carousel (2) has a rotary feedthrough (28) for the electrical and/or pneumatic supply of functional units located on the carousel (2).

12. Bristle production machine (1) according to one of the preceding claims,
wherein the holders (5) are each rotatably mounted on the carousel (2) about a holder rotation axis (29) oriented parallel to the axis of rotation (4) of the carousel (2), and/or wherein each holder (5) is configured to receive two or three or more bristle product bodies (6).

13. Bristle production machine (1) according to one of the preceding claims,
wherein the carousel (2) has a bearing plate (31) on which the holders (5) are rotatably mounted, preferably wherein a counter-bearing plate (32) is assigned to the bearing plate (31) and the holders (5) are arranged rotatably mounted between the bearing plate (31) and the counter-bearing plate (32) and on these.

14. Bristle production machine (1) according to one of the preceding claims,
wherein the carousel drive (3) is drive-connected via a transmission (33) to the carousel (2), in particular to the bearing plate (31) of the carousel (2).

15. Bristle production machine (1) according to one of the preceding claims,
wherein the bristle production machine (1) has at least one holder drive (30), in particular wherein the holder drive (30) is arranged outside the carousel (2) or on the carousel (2).

16. Bristle production machine (1) according to one of the preceding claims,
wherein a plurality of holders (5) are driven by a holder drive (31), or wherein a holder drive (31) is assigned to each holder (5).

17. Bristle production machine (1) according to one of the preceding claims,
wherein the bristle production machine (1) has a holder drive (30) which is drive-connected to at least two, preferably to all holders (5), via a transmission (33) designed as a distribution gear (34).

18. Bristle production machine (1) according to one of the preceding claims,
wherein the holders (5) each have at least one collet (35) for bristle product bodies (6) and/or bristle products (12).

19. Bristle production machine (1) according to one of the preceding claims,
wherein the bristle production machine (1) has an operating unit (36) which is configured for decoupling a drive connection to a holder (5) located in the loading and/or unloading station (11) and/or for opening a collet (35) of a holder (5) located in the loading and/or unloading station (11).

20. Bristle production machine (1) according to one of the preceding claims,
wherein the loading and/or unloading station (11) has a gripper (37) for removing finished bristle products (12) and/or for loading the holders (5) with bristle product bodies (6).

## Revendications

1. Machine de fabrication de brosses (1) avec un carrousel (2), sur lequel sont prévus au moins trois supports (5) disposés les uns derrière les autres dans la direction de rotation du carrousel (2) pour recevoir des corps de brosses (6), ainsi qu'un entraînement de carrousel (3), avec lequel le carrousel (2) est entraîné en rotation autour d'un axe de rotation (4), dans laquelle la machine de fabrication de brosses (1) présente au moins une station de perçage (7) avec un outil de perçage (8) ainsi qu'au moins une station de remplissage (9) avec un outil de remplissage (10) et au moins une station de chargement et/ou de déchargement (11) pour charger et/ou décharger les supports (5) et dans laquelle un axe d'alimentation (13) de l'outil de perçage (8) et un axe de remplissage (14) de l'outil de remplissage (10) sont alignés parallèlement l'un à l'autre, **caractérisée en ce que** la machine de fabrication de brosses (1) présente un dispositif de pivotement (16) avec un axe de pivotement (17) et un entraînement de pivotement (18) pour le carrousel (2), l'axe de pivotement (17) étant aligné à angle droit par rapport à l'axe de rotation (4) du carrousel (2).

2. Machine de fabrication de brosses (1) selon la revendication 1, dans laquelle l'outil de perçage (8) et l'outil de remplissage (10) sont disposés sur un montant commun (15) et/ou dans laquelle la machine de fabrication de brosses (1) présente un dispositif de blocage (47) pour le carrousel (2).

3. Machine de fabrication de brosses (1) selon la revendication 1 ou 2, dans laquelle l'axe de rotation (4) du carrousel (2) est disposé dans un plan entre l'axe d'alimentation (13) de l'outil de perçage (8) et l'axe de remplissage (14) de l'outil de remplissage (10) et/ou dans un plan qui est aligné parallèlement à l'axe d'alimentation (13) de l'outil de perçage (8) et à l'axe de remplissage (14) de l'outil de remplissage (10).

4. Machine de fabrication de brosses (1) selon l'une des revendications précédentes, dans laquelle l'axe de rotation (4) du carrousel (2), l'axe d'alimentation (13) de l'outil de perçage (8) et l'axe de remplissage (14) de l'outil de remplissage (10) sont alignés horizontalement.

5. Machine de fabrication de brosses (1) selon l'une des revendications précédentes, dans laquelle les supports (5) sont disposés sur le carrousel (2) de manière régulièrement répartie autour de l'axe de rotation (4) du carrousel (2).

6. Machine de fabrication de brosses (1) selon l'une des revendications précédentes, dans laquelle la machine de fabrication de brosses (1) présente un dispositif de réglage horizontal (19) avec un entraînement de réglage horizontal (20) et un guidage horizontal (21) orienté à angle droit par rapport à l'axe d'alimentation (13) de l'outil de perçage (8) et à l'axe de remplissage (14) de l'outil de remplissage (10), le long duquel le carrousel (2) peut être positionné.

7. Machine de fabrication de brosses (1) selon l'une des revendications précédentes, dans laquelle la machine de fabrication de brosses (1) présente un dispositif de levage (22) avec un entraînement de levage (23) et un axe de levage (24) orienté verticalement le long duquel le carrousel (2) est réglable en hauteur.

8. Machine de fabrication de brosses (1) selon l'une des revendications précédentes, dans laquelle la machine de fabrication de brosses (1) présente un chariot (25) sur lequel sont disposés conjointement l'outil de perçage (8) et l'outil de remplissage (10).

9. Machine de fabrication de brosses (1) selon la revendication précédente, dans laquelle le chariot (25) est monté de manière à être déplaçable linéairement dans un guidage de chariot (26) qui est orienté parallèlement à l**'**axe d'alimentation (13) de l'outil de perçage (8) et parallèlement à l**'**axe de remplissage (14) de l'outil de remplissage (10).

10. Machine de fabrication de brosses (1) selon l**'**une des deux revendications précédentes, dans laquelle la machine de fabrication de brosses (1) présente un entraînement de chariot (27) avec lequel le chariot (25) est déplaçable linéairement dans le guidage de chariot (26).

11. Machine de fabrication de brosses (1) selon l'une des revendications précédentes, dans laquelle le carrousel (2) présente un passage rotatif (28) pour alimenter électriquement et/ou pneumatiquement des unités fonctionnelles situées sur le carrousel (2).

12. Machine de fabrication de brosses (1) selon l'une des revendications précédentes, dans laquelle les supports (5) sont montés à chaque fois de manière rotative sur le carrousel (2) autour d'un axe de rotation de support (29) orienté parallèlement à l**'**axe de rotation (4) du carrousel (2) et/ou dans laquelle chaque support (5) est configuré pour recevoir deux ou trois corps de brosses (6) ou plus.

13. Machine de fabrication de brosses (1) selon l'une des revendications précédentes, dans laquelle le carrousel (2) présente une plaque de palier (31) sur laquelle les supports (5) sont montés de manière rotative, de préférence dans laquelle une contre-plaque de palier (32) est associée à la plaque de palier (31) et les supports (5) sont disposés entre la plaque de palier (31) et la contre-plaque de palier (32) et sont montés de manière rotative sur celles-ci.

14. Machine de fabrication de brosses (1) selon l'une des revendications précédentes, dans laquelle l'entraînement de carrousel (3) est relié en entraînement au carrousel (2), en particulier à la plaque de palier (31) du carrousel (2), par le biais d'une transmission (33).

15. Machine de fabrication de brosses (1) selon l'une des revendications précédentes, dans laquelle la machine de fabrication de brosses (1) présente au moins un entraînement de support (30), en particulier dans laquelle l'entraînement de support (30) est disposé à l'extérieur du carrousel (2) ou sur le carrousel (2).

16. Machine de fabrication de brosses (1) selon l'une des revendications précédentes, dans laquelle plusieurs support (5) sont entraînés avec un entraînement de support (30) ou dans laquelle un entraînement de support (30) est associé à chaque support (5).

17. Machine de fabrication de brosses (1) selon l'une des revendications précédentes, dans laquelle la machine de fabrication de brosses (1) présente un entraînement de support (30) qui est relié en entraînement à au moins deux supports (5), de préférence tous, par le biais d'une transmission (33) conçue sous la forme d'une transmission par répartition (34).

18. Machine de fabrication de brosses (1) selon l'une des revendications précédentes, dans laquelle les supports (5) présentent chacun au moins une pince de serrage (35) pour des corps de brosse (6) et/ou des articles de brosse (12).

19. Machine de fabrication de brosses (1) selon l'une des revendications précédentes, dans laquelle la machine de fabrication de brosses (1) présente une unité de commande (36) qui est configurée pour découpler une liaison d**'**entraînement par rapport à un support (5) situé dans la station de chargement et/ou de déchargement (11) et/ou pour ouvrir une pince de serrage (35) d'un support (5) situé dans la station de chargement et/ou de déchargement (11).

20. Machine de fabrication de brosses (1) selon l'une des revendications précédentes, dans laquelle la station de chargement et/ou de déchargement (11) présente un bras de manutention (37) pour prélever des articles de brosse finis (12) et/ou pour charger les supports (5) avec des corps de brosses (6).
